# EUROPÄISCHE PATENTANMELDUNG

(11) **EP 2 251 678 A2**
(43) Veröffentlichungstag der Anmeldung: **17.11.2010**
(21) Anmeldenummer: 10162288.4
(22) Anmeldetag: 07.05.2010
(51) Int. Cl.: G01N 21/90

(54) **Inspektionsvorrichtung zur Erkennung von Embossings und/oder Etiketten auf transparenten Gefäßen, insbesondere Getränkeflaschen**

(30) Priorität: 12.05.2009 DE 102009020920
(71) Anmelder: Krones AG, 93073 Neutraubling (DE)
(72) Erfinder: Kwirandt, Rainer, 93092, Barbing (DE)
(74) Vertreter: Grünecker, Kinkeldey, Stockmair & Schwanhäusser Anwaltssozietät

(57) **Zusammenfassung**

Die Erfindung betrifft eine Inspektionsvorrichtung (1) und ein Verfahren zur Erkennung von Embossings (7) und/oder Etiketten (9) auf transparenten Gefäßen, insbesondere Getränkeflaschen (5). Die Inspektionsvorrichtung umfasst eine Kamera (3) zum Abbilden eines Embossings und eines Etiketts eines zu untersuchenden Gefäßes und eine Durchlichtleuchte (13) mit einem Leuchtschirm, mit z.B. einem Streifenmuster, zum Durchleuchten des Embossings mit Durchlicht. Dadurch wird eine kompakte Inspektionsvorrichtung zum Erkennen von Etiketten und/oder Embossings und zum Kontrollieren deren Lage bereitgestellt.

## Beschreibung

Die Erfindung betrifft eine Inspektionsvorrichtung und ein Verfahren zur Erkennung von Embossings und/oder Etiketten auf transparenten Gefäßen, insbesondere Getränkeflaschen.

Bei der Getränkeabfüllung sind Etiketten und reliefartige Prägungen auf Flaschen, sogenannte Embossings, in der Regel möglichst exakt zueinander auszurichten. Dies wird bekanntermaßen dadurch erreicht, dass die befüllten Flaschen vor der Etikettierung auf drehbaren Zentriervorrichtungen in eine definierte Ausgangsdrehlage gebracht werden, wobei die Embossings durch Abwickeln der Flaschenoberfläche vor einer Kameraeinheit lokalisiert werden. Sowohl der Sitz der Flaschen auf den Ausrichtnocken der Zentriervorrichtungen als auch der Antrieb der Zentriervorrichtungen verursachen jedoch Ungenauigkeiten, so dass einzelne Etiketten unter Umständen nicht mit der geforderten Genauigkeit aufgebracht werden können.

Bekannte Inspektionsvorrichtungen für Etiketten, wie z. B. in der DE 20 2005 020 478 U1, der EP 0 872 724 A2 und der US 4,509,081 beschrieben, erlauben zwar eine Bild gebende Kontrolle der Etiketten im Auflicht; mit diesen Vorrichtungen lassen sich jedoch die vergleichsweise kontrastarmen Embossings nicht zuverlässig erkennen.

Es besteht daher Bedarf für eine kompakte, gegebenfalls nachrüstbare Inspektionsvorrichtung zum Erkennen von Etiketten und Embossings und zum Kontrollieren deren Lage zueinander. Aufgabe der Erfindung ist es, hier Abhilfe zu schaffen.

Diese Aufgabe wird gelöst mit Hilfe einer Inspektionsvorrichtung, die umfasst: eine Kamera zum Abbilden eines Embossings und/oder eines Etiketts eines zu untersuchenden Gefäßes in einem Kamerabild; und eine Durchlichtleuchte mit einem Leuchtschirm zum Durchleuchten des Embossings mit Durchlicht.

Im Durchlicht lassen sich Embossings besonders kontrastreich darstellen. Die Beleuchtung kann für die Erkennung von Embossings und Etiketten jeweils getrennt optimiert werden, so dass eine besonders genaue und zuverlässige Auswertung des Kamerabilds möglicht wird. Vorzugsweise sind auf dem Leuchtschirm Bereiche mit unterschiedlicher Leuchtdichte ausgebildet. Dies erhöht im Kamerabild den Kontrast an den Reliefstrukturen des Embossings, auch bei schwach ausgeprägten Embossings.

Bei einer besonders vorteilhaften Ausgestaltung ist der Übergang der Leuchtdichte zwischen den Bereichen unterschiedlicher Leuchtdichte graduell. Dadurch können Helligkeitsunterschiede in Bereichen ohne Reliefstrukturen durch Filterung bei der Auswertung besonders gut ausgeblendet werden und Reliefstrukturen im Kamerabild zuverlässiger und genauer geortet werden.

Vorzugsweise sind die Bereiche unterschiedlicher Leuchtdichte in einem Streifenmuster angeordnet. Dadurch lassen sich besonders markante Konturen im Kamerabild erzeugen.

Bei einer besonders günstigen Ausführungsform umfasst das Streifenmuster ein bis drei dunkle Streifen. Dies verbessert insbesondere die Erkennung von Zeichen im Kamerabild, wie z. B. die Lesbarkeit von Buchstaben des Embossings.

Vorzugsweise ist der Leuchtschirm außerhalb der Brennweite des Gefäßes angeordnet, so dass das Gefäß auf das Durchlicht als Zylinderlinse wirkt und der Abstand zwischen dem Leuchtschirm und der Brennlinie des Gefäßes höchstens das Zweifache der Brennweite des Gefäßes beträgt. Dadurch genügt eine vergleichsweise schmale Leuchte zum Erzeugen des Durchlichts. Die Vorrichtung kann daher sehr kompakt ausgeführt werden.

Eine besonders günstige Ausführungsform umfasst ferner eine Berechnungseinheit zum Bestimmen der Lage des Embossings und des Etiketts im Kamerabild. Dies ermöglicht eine Entscheidung, ob die untersuchte Flasche den Qualitätsanforderungen genügt oder aus dem Produktstrom ausgesondert werden muss.

Vorzugsweise umfasst die Inspektionsvorrichtung ferner eine Auflichtleuchte zum Beleuchten des Etiketts im Auflicht. Dadurch kann das Etikett besonders kontrastreich und scharf dargestellt werden.

Vorzugsweise kann die Helligkeit der Auflichtleuchte und/oder der Durchlichtleuchte so eingestellt werden, dass der Helligkeitsunterschied zwischen dem Embossing und dem Etikett im Kamerabild möglichst klein wird. Dadurch wird vermieden, dass zu erkennende Strukturen im Kamerabild übersteuert oder zu dunkel bzw. für eine Bildauswertung mit Filterung und/oder Transformation zu kontrastarm sind.

Die zugrunde liegende Aufgabe wird ferner gelöst mit Hilfe eines Verfahrens, das folgende Schritte umfasst: Durchleuchten eines Embossings eines zu untersuchenden Gefäßes mit Durchlicht; und Abbilden des Embossings und/oder eines Etiketts des zu untersuchenden Gefäßes in einem Kamerabild.

Im Durchlicht lassen sich Embossings besonders kontrastreich darstellen. Die Beleuchtung kann für die Erkennung von Embossing und Etiketten jeweils getrennt optimiert werden, so dass eine besonders genaue und zuverlässige Auswertung des Kamerabilds möglicht wird.

Bei einer bevorzugten Ausgestaltung des Verfahrens wird das Farbspektrum des Durchlichts an die spektralen Transmissionseigenschaften der Flasche und/oder des Flascheninhalts angepasst. Dadurch kann die Helligkeit des Embossings im Kamerabild erhöht werden.

Vorzugsweise wird die Kamera auf die Vorderseite des Gefäßes fokussiert und die Blende der Kamera so weit geöffnet, dass ein auf der Rückseite des Gefäßes angeordnetes Embossing unscharf abgebildet wird. Dadurch kann ein rückwärtiges Embossing durch Filterung der Bilddaten ausgeblendet und somit von einem scharf abgebildeten Embossing auf der Vorderseite des Gefäßes unterschieden werden.

Bei einer besonders günstigen Ausgestaltung wird das Durchlicht von einem Leuchtschirm abgestrahlt, der außerhalb der Brennweite des Gefäßes angeordnet ist, so dass das Gefäß auf das Durchlicht als Zylinderlinse wirkt und der Abstand des Leuchtschirms von der Brennlinie des Gefäßes höchstens das Zweifache der Brennweite des Gefäßes beträgt. Dadurch genügt eine vergleichsweise schmale Leuchte zum Erzeugen des Durchlichts, wodurch die Inspektionsvorrichtung besonders kompakt ausgeführt werden kann.

Vorzugsweise umfasst das Verfahren ferner einen Schritt zum Beleuchten des Etiketts mit Auflicht. Dadurch kann das Etikett besonders kontrastreich und scharf dargestellt werden.

Vorzugsweise wird die Helligkeit des Auflichts und/oder des Durchlichts so eingestellt, dass der Helligkeitsunterschied zwischen dem Embossing und dem Etikett im Kamerabild möglichst klein wird. Dadurch wird vermieden, dass für die Erkennung wichtige Strukturen im Kamerabild übersteuert oder zu dunkel sind. Somit können die zugehörigen Bilddaten nach Filterung und/oder Transformation in geeigneter Weise ausgewertet werden.

Eine bevorzugte Ausführungsform der Erfindung ist in der Zeichnung dargestellt. Es zeigen:
Fig. 1 eine schematische Seitenansicht der Inspektionsvorrichtung;
Fig. 2 eine schematische Draufsicht auf die Inspektionsvorrichtung; und
Fig.3 eine schematische Vorderansicht der Durchlichtleuchte aus Fig. 1 und 2.

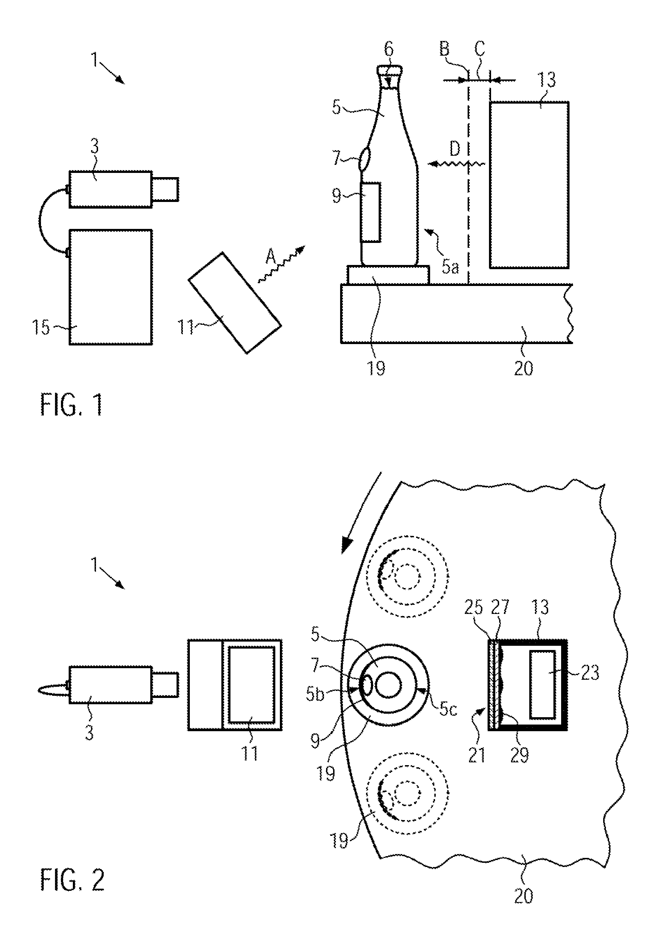

Wie Fig. 1 und 2 erkennen lassen, umfasst die erfindungsgemäße Inspektionsvorrichtung 1: eine Kamera 3 zum Abbilden einer zu untersuchenden, transparenten Flasche 5 mit einem Embossing 7 und einem Etikett 9; eine auf das Etikett 9 gerichtete Auflichtleuchte 11; eine in Richtung der Flasche 5 und der Kamera 3 strahlende Durchlichtleuchte 13; und eine Berechnungseinheit 15 zum Auswerten von mit der Kamera 3 aufgenommenen Kamerabildern 17. Gezeigt sind ferner Zentrierhalterungen 19 für die Flaschen 5, die auf einem Transportmittel 20, wie z. B. einem Transportkarussell oder auch einem Förderband, durch den Bildbereich der Kamera 3 geführt werden.

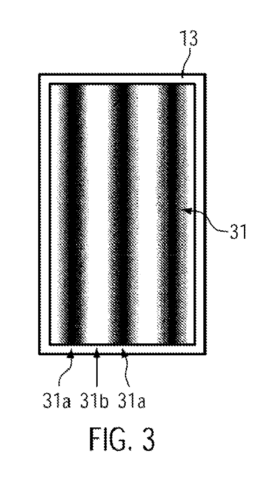

In Fig. 2 ist die Durchlichtleuchte 13 mit einem Leuchtschirm 21 und einer Lichtquelle 23 im Schnitt dargestellt. Der Leuchtschirm 21 umfasst auf seiner der Flasche 5 zugewandten Seite eine Streuscheibe 25, wie z. B. eine Milchglasscheibe oder durchscheinende Kunststoffplatte, und auf seiner der Leuchte 23 zugewandten Seite eine mit einem Farbstoff 29 abschnittsweise unterschiedlich stark bedruckte Folie 27. Die Schichtdicke des Farbstoffs 29 ist in Fig. 2 zum besseren Verständnis stark übertrieben dargestellt, wobei Bereiche großer Schichtdicke Bereichen geringer Leuchtdichte entsprechen und umgekehrt. Die Lichtdurchlässigkeit des Farbstoffs 29 variiert in horizontaler Richtung entlang des Leuchtschirms 21 wiederholt, so dass sich, wie aus Fig. 3 ersichtlich, auf dem Leuchtschirm 21 dunkle Bereiche 31 a mit niedriger Leuchtdichte und helle Bereiche 31 b mit hoher Leuchtdichte in horizontaler Richtung abwechseln. Der Übergang der Leuchtdichte von den dunklen Bereichen 31 a zu den hellen Bereichen 31 b und umgekehrt ist graduell.

Insbesondere aus der Parallelperspektive der Fig. 3 wird deutlich, dass die Bereiche 31 a,b unterschiedlicher Leuchtdichte auf dem Leuchtschirm 21 ein im Wesentlichen vertikal bzw. parallel zur Hauptachse der Flasche 5 ausgerichtetes Streifenmuster 31 bilden.

Mit derartigen Streifenmustern 31 genügen bereits geringfügige Strahlablenkungen am Embossing 7, um scharf abgegrenzte, kontrastreiche und damit zuverlässig zu identifizierende Strukturen im Kamerabild 17 zu erzeugen.

Bezüglich des Durchlichtstrahlengangs wirkt die Flasche 5, insbesondere ihr zylindrischer Flaschenkörper 5a, als bikonvexe Zylinderlinse, deren Brennweite sich rechnerisch aus dem inneren und äußeren Flaschendurchmesser sowie den Brechungsindices der Flasche 5 und des Flascheninhalts 6 ergibt. Die Zentrierhalterung 19 und die Durchlichtleuchte 13 sind so angeordnet, dass der Abstand C zwischen der Brennlinie B der Flasche 5 und dem Leuchtschirm 21 null bis das Zweifache der Brennweite der Zylinderlinse beträgt, vorzugsweise null bis eine Brennweite. Damit wird zum Einen ein genügend großer Abstand zwischen der Zentrierhalterung 19 und der Durchlichtleuchte 13 eingehalten; zum Anderen ist aufgrund der Vergrößerungswirkung der Zylinderlinse bereits eine vergleichsweise schmale Durchlichtleuchte 13 ausreichend, um die gesamte Breite der Flasche 5 auszuleuchten. Je nach Auslegung der Durchlichtleuchte 13 kann der Abstand C jedoch auch größer sein. Ebenso könnte die Durchlichtleuchte 13 innerhalb der Brennweite der Flasche 5 angeordnet werden. Allerdings würde die Flasche 5 dann als Lupe wirken und nur einen Teil des Leuchtschirms 21 virtuell abbilden.

Die Anzahl dunkler Bereiche 31a des Leuchtschirms 21 beträgt vorzugsweise eins bis fünf, bei einer besonders günstigen Weiterbildung der Erfindung drei. Damit lassen sich Buchstaben im Embossing 7 besonders gut erkennen. Der Helligkeitsverlauf auf der abgebildeten Flasche 5 ist dabei für die anschließende Bildauswertung besonders günstig, wenn das Muster 31 einen mittigen, dunklen Streifen 31a aufweist. Die Vorrichtung ist jedoch auch mit einer größeren Zahl dunkler Bereiche 31a denkbar.

Es ist generell möglich, andere Helligkeitsverteilungen auf dem Leuchtschirm 21 vorzusehen, z. B. im Wesentlichen horizontal ausgerichtete Streifenmuster 31, Schachbrettmuster oder Ringmuster, um speziell geformte Embossings 7 besonders zuverlässig erkennen zu können.

Der graduelle Übergang der Leuchtdichte von den Bereichen 31a zu den Bereichen 31b und umgekehrt entspricht vorzugsweise einem wellenförmigen Muster, beispielsweise einem Sinusoid.

Der Farbstoff 29 kann auf einer beliebigen Seite der Folie 27 oder auch auf beiden Seiten der Folie 27 aufgedruckt sein. Ebenso ist es möglich, den Farbstoff 29 in die Folie 27 einzuarbeiten. Es ist auch denkbar, den Farbstoff 29 direkt auf der der Lichtquelle 23 zugewandten Seite der Streuscheibe 25 aufzubringen, z. B. durch Siebdruck. Die Verwendung einer Folie 27 hat jedoch den Vorteil, dass zwischen verschiedenen Streifenmustern 31 einfach gewechselt werden kann, um die Inspektionsvorrichtung 1 an bestimmte Flaschenformen und/oder Strukturen auf der Flaschenoberfläche anzupassen.

Der Farbstoff 29 hat zweckmäßigerweise in erster Linie eine optische Absorptionswirkung, um die Bereiche 31 a mit niedriger Leuchtdichte auszubilden. Es wäre jedoch auch möglich, die Bereiche 31 b mit hoher Leuchtdichte mit Hilfe eines fluoreszierenden Farbstoffs 29 auszubilden. Die Bereiche 31a,b könnten auch durch Kombination von absorbierenden und/oder fluoreszierenden Farbstoffen 29 ausgebildet werden.

Alternativ könnten die dunklen und hellen Bereiche 31 a,b durch bereichsweise unterschiedlich helle Beleuchtung des Leuchtschirms 21 erzeugt werden. Die Lichtquelle 23 könnten zu diesem Zweck als LED-Matrix ausgebildet sein, deren LED-Elemente unterschiedlich hell leuchten. Je nach Anzahl und Größe der Elemente wären diese in einem geeigneten Abstand zur Streuscheibe 25 anzuordnen, so dass ein geglättetes Leuchtmuster 31 mit graduellen Helligkeitsübergängen ausgebildet wird. Mit dieser Variante könnten auch ohne Umbauten unterschiedliche Muster 31 erzeugt werden.

Die Lichtquelle 23 ist vorzugsweise eine gepulste LED-Lampe bzw. Blitzlampe mit einstellbarer Helligkeit und Pulslänge bzw. Blitzdauer. Es sind jedoch auch andere Lampentypen vorstellbar. Das Emissionsspektrum der Durchlichtleuchte 13 ist vorzugsweise an das Absorptionsspektrum der Flasche 5 und/oder des Flascheninhalts 6 angepasst, um das Embossing 7 möglichst effizient zu durchleuchten und im Kamerabild 17 hell darzustellen.

Die Auflichtleuchte 11 ist z. B. eine gepulste LED-Leuchte bzw. Blitzlampe mit einstellbarer Helligkeit und Pulslänge bzw. Blitzdauer. Es sind jedoch auch andere Lampentypen vorstellbar.

Die Helligkeit und/oder die Pulslänge der Auflichtleuchte 11 und der Durchlichtleuchte 13 werden bevorzugt so eingestellt, dass das Embossing 7 und das Etikett 9 im selben Kamerabild 17 mittels Struktur- oder Zeichenerkennung lokalisiert werden können. Das heißt, das Embossing 7 und das Etikett 9 werden so ausgeleuchtet, dass ihre Helligkeit im Kamerabild 17 möglichst gleich ist, bzw. innerhalb eines geeigneten, von der Kamera 3 auflösbaren Dynamikbereichs liegt. Eine solche Helligkeitsanpassung, z. B. der Auflichtleuchte 11, könnte auch durch einen Filter, beispielsweise einen Graufilter, im Beleuchtungsstrahlengang erfolgen. Die direkte Einstellung der Leuchtenhelligkeit bzw. der Pulslänge ist jedoch aus energetischer Sicht und wegen der größeren Flexibilität bei Produktwechseln zu bevorzugen.

Die Kamera 3 wird auf die der Kamera 3 zugewandte Vorderseite 5b der Flasche 5 fokussiert und nimmt diese bevorzugt mit geöffneter Blende bzw. minimaler Schärfentiefe auf. Dadurch wird erreicht, dass ein auf der von der Kamera 3 abgewandten Rückseite 5c der Flasche 5 befindliches Embossing 7 unscharf abgebildet wird und somit von einem Embossing 7 auf der Vorderseite 5b zuverlässig unterschieden werden kann. Das unscharf abgebildete Embossing 7 verursacht weiche Helligkeitsverläufe im Kamerabild 17, die bei der Auswertung durch geeignete Filterung aus dem Kamerabild 17 entfernt werden können. Somit kann eine Flasche 5 erkannt werden, bei der das Etikett 9 fälschlicherweise um 180° versetzt zum Embossing 7 angebracht wurde.

Ein rückwärtiges Embossing 7 könnte bei scharfer Abbildung mit entsprechend verkleinerter Kamerablende alternativ auch dadurch erkannt werden, dass es durch die Zylinderlinsenwirkung der Flasche 5 in horizontaler Richtung gespreizt und seitenverkehrt im Kamerabild 17 abgebildet wird.

Die Berechnungseinheit 15 wertet die Kamerabilder 17 durch Filterung mit Kanten- und/oder Bandpassfiltern und/oder Fouriertransformation und anschließender Struktur- bzw. Zeichenerkennung aus. Hierbei erhöht das Muster 31 der Durchlichtleuchte 13 den Kontrast in den abgebildeten Erhebungen bzw. Vertiefungen des Embossings 7, während das Muster 31 in den übrigen Bereichen der abgebildeten Flasche 5 aufgrund der graduellen Helligkeitsverläufe zwischen den hellen und dunklen Bereichen 31a,b durch die Filterung bzw. Transformation ausgeblendet wird. Dies ermöglicht eine Lokalisierung des Embossings 7 mit hoher Zuverlässigkeit und Präzision.

Die Inspektionsvorrichtung 1 eignet sich dazu, die Lage des Embossings 7 bzw. die Lage des Etiketts 9 bezüglich des Embossings 7 in einer vorgegebenen Drehlage der Flasche 5 zu kontrollieren, wobei die Flasche 5 während der Inspektion gedreht oder angehalten werden kann.

Es wäre jedoch auch möglich, das Embossing 7 und/oder eine Pressnaht der Flasche 5 bei unbekannter Drehlage der Flasche 5 im Durchlicht D zu lokalisieren, um vor der Etikettierung eine vorgegebene Drehlage anfahren zu können. Beispielsweise kann die Embossingerkennung im Durchlicht D als Positionsgeber für eine Ausrichtung einer Pressnaht, eines Embossings usw. zur späteren oder nachfolgenden Etikettierung dienen. In diesem Fall ist die Auflichtleuchte 11 nicht erforderlich.

Für eine derartige Inspektion bei sich drehender, unetikettierter Flasche 5 wäre die Durchlichtleuchte 13 entsprechend breiter auszulegen, da von der auf dem Transportmittel 20 vorbeilaufenden Flasche 5 dann mehrere Kamerabilder 17 in verschiedenen Drehlagen benötigt werden. Ebenso wären dann gegebenenfalls mehrere Kameras 3 vorzusehen, deren Bildbereiche sich seitlich überlappen.

Obwohl die Verwendung der Auflichtleuchte 11 zur Abbildung des Etiketts 9 vorteilhaft ist, da sie eine helle und reproduzierbare Ausleuchtung des Etiketts 9 und somit kurze Belichtungszeiten ermöglicht, wäre eine Abbildung des Etiketts 9 auch ohne die beschriebene Auflichtleuchte 11, mit Hilfe anderer Lichtquellen, wie z. B. Raumlicht, prinzipiell möglich.

Die Flasche 5 ist z. B. eine Getränkeflasche aus Glas oder PET. Es können jedoch beliebige transparente Behälter mit Etikett und Embossing, auch im ungefüllten Zustand, mit der Inspektionsvorrichtung 1 überprüft werden.

Mit der Inspektionsvorrichtung kann wie folgt gearbeitet werden:
Ein Produktstrom bestehend aus etikettierten Flaschen 5 wird von dem Transportmittel 20 durch den Bildbereich der Kamera 3 geführt. Dabei werden die Flaschen 5 vor der Inspektion mit der Zentrierhalterung 19 jeweils in eine vorgegebene Drehlage gebracht, so dass die zu untersuchenden Etiketten 9 zur Kamera 3 hin ausgerichtet sind.

Während der Inspektion kann die Zentrierhalterung 19 gedreht oder angehalten werden. Im Bildbereich der Kamera 3 wird das Etikett 9 mit der Auflichtleuchte 11, z. B. durch einen Lichtblitz A, beleuchtet. Gleichzeitig durchleuchtet die Durchlichtleuchte 13 die Flasche 5 von der der Kamera abgewandten Seite, vorzugsweise durch einen Lichtblitz D. Die Kamera 3 macht von der im Auflicht A und im Durchlicht D belichteten Flasche 5 eine Aufnahme 17, wobei die Helligkeit bzw. Blitzdauer der Leuchten 11,13 so aufeinander abgestimmt sind, dass das Embossing 7 und das Etikett 9 im Kamerabild 17 möglichst gleich hell erscheinen. Die Bilddaten werden an eine Berechnungseinheit 15 übergeben, die die für eine Lageerkennung geeigneten Strukturen durch Filterung und/oder Fouriertransformation extrahiert. Dieser Schritt wird dadurch erleichtert und präzisiert, dass das Durchlicht D von einem Leuchtschirm 21 mit streifenförmiger, gradueller Helligkeitsverteilung erzeugt wird. Dies verbessert den Kontrast der Reliefstrukturen des Embossings 7 und unterdrückt Artefakte in Bereichen außerhalb der Reliefstrukturen. Durch Struktur- bzw. Zeichenerkennung wird die Lage des Embossings 7 und des Etiketts 9 ermittelt und miteinander verglichen. Liegt das Embossing 7 bzw. das Etikett 9 außerhalb eines vorgegebenen Toleranzbereichs, kann die Flasche 5 aus dem Produktstrom ausgesondert werden.

## Patentansprüche

1. Inspektionsvorrichtung (1) zum Erkennen von Embossings (7) und/oder Etiketten (9) auf transparenten Gefäßen (5), insbesondere Getränkeflaschen, mit:
- einer Kamera (3) zum Abbilden eines Embossings (7) und/oder eines Etiketts (9) eines zu untersuchenden Gefäßes (5) in einem Kamerabild (17); und
- einer Durchlichtleuchte (13) mit einem Leuchtschirm (21) zum Durchleuchten des Embossings (7) mit Durchlicht (D).

2. Inspektionsvorrichtung nach Anspruch 1, **dadurch gekennzeichnet, dass** auf dem Leuchtschirm (21) Bereiche (31a,b) mit unterschiedlicher Leuchtdichte ausgebildet sind.

3. Inspektionsvorrichtung nach Anspruch 2, **dadurch gekennzeichnet, dass** der Übergang der Leuchtdichte zwischen den Bereichen (31a,b) unterschiedlicher Leuchtdichte graduell ist.

4. Inspektionsvorrichtung nach Anspruch 2 oder 3, **dadurch gekennzeichnet, dass** die Bereiche (31a,b) unterschiedlicher Leuchtdichte in einem Streifenmuster (31) angeordnet sind.

5. Inspektionsvorrichtung nach Anspruch 4, **dadurch gekennzeichnet, dass** das Streifenmuster (31) ein bis drei dunkle Streifen (31 a) umfasst.

6. Inspektionsvorrichtung nach mindestens einem der vorigen Ansprüche, **dadurch gekennzeichnet, dass** der Leuchtschirm (21) außerhalb der Brennweite des Gefäßes (5) angeordnet ist, so dass das Gefäß (5) auf das Durchlicht (D) als Zylinderlinse wirkt und der Abstand (C) zwischen dem Leuchtschirm (21) und der Brennlinie (B) des Gefäßes (5) höchstens das Zweifache der Brennweite des Gefäßes (5) beträgt.

7. Inspektionsvorrichtung nach mindestens einem der vorigen Ansprüche, ferner **gekennzeichnet durch** eine Berechnungseinheit zum Bestimmen der Lage des Embossings (7) und/oder des Etiketts (9) im Kamerabild (17).

8. Inspektionsvorrichtung nach mindestens einem der vorigen Ansprüche, ferner **gekennzeichnet durch** eine Auflichtleuchte (11) zum Beleuchten des Etiketts (9) mit Auflicht (A).

9. Inspektionsvorrichtung nach Anspruch 8, **dadurch gekennzeichnet, dass** die Helligkeit der Auflichtleuchte (11) und/oder der Durchlichtleuchte (13) so eingestellt werden kann, dass der Helligkeitsunterschied zwischen dem Embossing (7) und dem Etikett (9) im Kamerabild (17) möglichst klein wird.

10. Verfahren zum Erkennen von Embossings (7) und/oder Etiketten (9) auf transparenten Gefäßen (5), insbesondere Getränkeflaschen, mit folgenden Schritten:
a) Durchleuchten eines Embossings (7) eines zu untersuchenden Gefäßes (5) mit Durchlicht (D); und
c) Abbilden des Embossings (7) und/oder eines Etiketts (9) des zu untersuchenden Gefäßes (5) in einem Kamerabild (17).

11. Verfahren nach Anspruch 10, **dadurch gekennzeichnet, dass** das Farbspektrum des Durchlichts (D) an die spektralen Transmissionseigenschaften der Flasche (5) und/oder des Flascheninhalts (6) angepasst wird.

12. Verfahren nach Anspruch 10 oder 11, **dadurch gekennzeichnet, dass** die Kamera (3) auf die Vorderseite (5b) des Gefäßes (5) fokussiert und die Blende der Kamera (3) so weit geöffnet wird, dass ein auf der Rückseite (5c) des Gefäßes (5) angeordnetes Embossing (7) unscharf abgebildet wird.

13. Verfahren nach mindestens einem der vorigen Ansprüche 10 bis 12, **dadurch gekennzeichnet, dass** das Durchlicht von einem Leuchtschirm (21) abgestrahlt wird, der außerhalb der Brennweite des Gefäßes (5) angeordnet ist, so dass das Gefäß (5) bezüglich des Durchlichts (D) als Zylinderlinse wirkt und der Abstand (C) des Leuchtschirms (21) von der Brennlinie (B) des Gefäßes (5) höchstens das Zweifache der Brennweite des Gefäßes (5) beträgt.

14. Verfahren nach mindestens einem der vorigen Ansprüche 10 bis 13, ferner **gekennzeichnet durch** einen Schritt b) zum Beleuchten des Etiketts (9) mit Auflicht (A).

15. Verfahren nach Anspruch 14, **dadurch gekennzeichnet, dass** die Helligkeit des Auflichts (A) und/oder des Durchlichts (D) so eingestellt wird, dass der Helligkeitsunterschied zwischen dem Embossing (7) und dem Etikett (9) im Kamerabild (17) möglichst klein wird.
